# FASCICULE DE BREVET EUROPEEN

(11) **EP 0 447 789 B1**
(45) Date de publication et mention de la délivrance du brevet: **11.06.1997**
(21) Numéro de dépôt: 91101859.6
(22) Date de dépôt: 11.02.1991
(51) Int. Cl.: H01B 3/30, C08G 18/10, C08G 18/61

(54) **Vernis d'émaillage, procédé de fabrication d'un tel vernis et fil conducteur émaillé en faisant application**
Emaillacke, Verfahren zu deren Herstellung und deren Verwendung in lackisolierten Leitern
Enamel coating, a process for preparing the same and an enamelled conductor made with the same

(30) Priorité: 16.02.1990 FR 9001895
(43) Date de publication de la demande: 25.09.1991
(73) Titulaire: ALCATEL CUIVRE, F-92111 Clichy (FR)
(72) Inventeur: André, Raymond, F-02300 Autreville (FR); Binder, Germaine, F-02300 Sinceny (FR); Le Tiec, Pierre-Yves, F-02700 Vouel (FR); Barraud, Jean-Yves, F-75010 Paris (FR); Fauvarque, Jean-François, F-75006 Paris (FR); Preux, Laurent, F-02300 Chauny (FR)
(74) Mandataire: Weinmiller, Jürgen

(56) Documents cités:
- EP-A- 0 217 364
- DE-A- 1 947 071
- US-A- 3 413 148
- US-A- 4 348 460
- US-A- 4 693 936

## Description

La présente invention concerne un vernis d'émaillage, et un procédé de fabrication d'un tel vernis.
L'invention s'applique notamment mais non exclusivement à l'émaillage de fils conducteurs, destinés à être bobinés, par exemple par des machines automatiques, en vue d'une utilisation dans des moteurs électriques ou tout composant électrique.

Dans l'exemple d'application du bobinage des moteurs électriques, il est tout à fait impératif que le faisceau de fils associés ait l'encombrement le plus réduit possible et puisse être introduit aisément dans le logement qui lui est attribué, sans aucune détériotation des qualités isolantes de l'émail.

La réalisation des bobinages se fait à des vitesses élevées ; durant cette opération le conducteur émaillé est soumis à des frottements et à de fortes contraintes mécaniques qui, s'ils sont trop importants, risquent de provoquer une dégradation de l'isolant et un mauvais rangement de ce conducteur, par exemple lors de l'insertion dans les encoches d'un stator ; il en résulte des conséquences graves sur la qualité de l'isolation, sur la durée de vie et le rendement du composant réalisé.

Plusieurs solutions ont été déjà proposées pour diminuer le coefficient de frottement des conducteurs électriques émaillés et rendre leur surface glissante et aisément bobinable.

Une première solution consiste à effectuer une lubrification externe du conducteur émaillé par enduction de sa surface par des substances lubrifiantes telles que des paraffines, des huiles, des cires naturelles ou synthétiques, des polysiloxanes. On constate que le résultat est insuffisant et irrégulier.

Une seconde solution consiste à prévoir sur le conducteur une couche externe de polyamide 6-6, commercialement dénommé NYLON, connu pour sa bonne aptitude au glissement. Les résultats obtenus montrent que ce procédé apporte une amélioration du point de vue glissement, mais que le nylon diminue les caractéristiques thermiques des fils conducteurs ayant un indice thermique supérieur à 200°C.

Une troisième solution consiste à introduire dans la couche de finition du conducteur un agent de lubrification interne. Les polymères les plus fréquemment utilisés en couche de finition sont les polyamides aliphatiques ou aromatiques, les polyamides imides aromatiques, les polyesters imides, les polyimides, les acétals de l'alcool polyvinylique, les polyamides mixtes aliphatiques/aromatiques, les polyépoxy, les polyphénoxy.
Le brevet français FR-A-2 533 357 indique comment on peut réaliser un vemis en incorporant dans un tel polymère un lubrifiant interne solide sous forme particulaire dans une proportion inférieure à 0,3 %. Cette technique est basée sur le choix d'un matériau lubrifiant incompatible avec le polymère de base. Cette incompatibilité a pour effet d'expulser à la surface de la couche de finition des particules de lubrifiant solides qui améliorent le glissement Toutefois un tel procédé est très difficile à mettre en oeuvre industriellement. En effet l'incompatibilité des deux matériaux en présence ne permet pas d'incorporer une quantité suffisante de lubrifiant, et elle conduit fréquemment à des irrégularités d'aspect du conducteur inacceptables par l'utilisateur.

La présente invention a pour but de pallier ces inconvénients.

La présente invention a pour objet un vernis démaillage comprenant un premier polymère de base choisi parmi un polyuréthane, un polyamide, un polyamide-imide, un polyester, un polyester-imide, un polyimide, les acétals de l'alcool polyvinylique, les polyépoxy, les polyphénoxy,
vernis caractérisé par le fait qu'il comporte en outre
- un second polymère choisi parmi les polysiloxanes, et se trouvant dans une proportion supérieure ou égale à 7,2 % en poids allant jusqu'à 30 % en poids,
- un copolymère, compatible avec ledit premier polymère, et portant des chaînes polysiloxane greffées, et se trouvant dans une proportion comprise entre 0,5 % et 20 % en poids, ledit copolymère assurant une fonction d'agent compatibilisant entre ledit premier polymère de base et ledit second polymère et créant ainsi un alliage de polymères.

Ledit vernis comporte de préférence un pourcentage en poids de copolymère compris entre 1 % et 10 %.

La présence du copolymère permet d'incorporer du second polymère dans une proportion allant jusqu'à 30 % en poids de mélange, alors qu'auparavant il n'était possible d'en introduire que 0,3 %. Le copolymère assure une fonction d'agent compatibilisant entre le premier et le second polymère et crée un alliage de polymères qui conjugue toutes les propriétés des deux polymères d'origine.

La présente invention a également pour objet un procédé de synthèse du copolymère précité portant des fonctions polysiloxanes et compatible avec un premier polymère choisi parmi un polyamide-imide, un polyester, un polyester-imide, un polyester amide-imide, un polyamide, un polyimide, un polyuréthane, les acétals de l'alcool polyvinylique.

Ce procédé consiste à faire réagir un polysiloxane fonctionnalisé sur un diisocyanate dont une fonction isocyanate est préalablement bloquée, et de greffer ensuite le polysilox NCO bloqué obtenu sur ledit premier polymère.

Le polysiloxane fonctionnalisé est par exemple un polysiloxane aminé.

Le blocage de ladite fonction isocyanate est obtenu par réaction avec un réactif alcoolique, aliphatique ou aromatique choisi parmi les alcools aliphatiques, les phénols, le resorcinol, l'alcool benzylique, le phloroglucinol...

La présente invention a également pour objet un fil conducteur émaillé comportant au moins superficiellement un émail obtenu par réticulation du vernis précédemment défini. Cet émail peut constituer l'émail de base ou une surcouche sur un émail de base, ou une couche de finition, ou une couche externe dudit émail de base.

Selon une variante particulièrement intéressante, le fil conducteur appartient à une classe thermique supérieure ou égale à la classe 200, avec un caractère glissant au moins égal à celui obtenu avec une couche externe de polyamide 6-6 paraffiné.

Sa surcouche en émail est à base de polyamide-imide.

Tout fil conducteur émaillé selon l'invention peut être de plus avantageusement muni superficiellement d'un agent de lubrification externe choisi parmi les paraffines, les huiles, les cires, les composés polysiloxanes, les composés à chaînes fluorées.

D'autres caractéristiques et avantages de la présente invention apparaitront au cours de la description suivante de modes de réalisation donnés à titre illustratif mais nullement limitatif. Dans le dessin annexé, la figure unique est une vue très schématique en coupe d'un exemple de fil conducteur émaillé faisant application ou vernis selon l'invention.

On réalise tout d'abord un vernis d'émaillage comprenant un premier polymère de base constitué par un polyamide-imide, et un copolymère compatible avec ce premier polymère et portant des fonctions polysiloxanes.

On s'intéresse en premier lieu à la synthèse du copolymère. Cette )synthèse est réalisée en deux étapes la première étape consiste à effectuer la synthèse d'un polysilox NCO bloqué et la seconde étape consiste à greffer ce polysilox NCO bloqué sur une chaîne amide imide.

Au cours de la première étape on fait réagir un polysiloxane fonctionnalisé par un groupe amino sur un diisocyanate. (Il faut noter que la fonctionnalisation du polysiloxane peut être étendue à toute fonction réactive sur un isocyanate).
Une des deux fonctions isocyanate est temporairement bloquée par une réaction avec un composé monofonctionnel, par exemple hydroxylé ; cette réaction est décrite par G.R. Griffin dans l'article paru dans IEC Product Research and Development vol. 1, n°4, Dec. 1962. On peut utiliser à cet effet les alcools aliphatiques, les phénols, le resorcinol, l'alcool benzylique, le phloroglucinol... ; ces substances sont aisément déplacées par substitution nucléophile. On donne ci-dessous trois exemples de synthèse de polysilox NCO bloqué.

### EXEMPLE 1

On fair réagir une heure à 80°C les composés suivants :
- Toluène diisocyanate (TDI) 174 g (1 mole)
- m Cresol 108 g (1 mole)
- Polysiloxane aminé 329 g (1 mole NH2)
- N-méthyl-pyrrolidone 1130 g
- Triéthylamine 1,8 g
Le polysilox NCO bloqué n° 1 obtenu a une masse de 611 g. La matière sèche est de 35 %.

### EXEMPLE 2

On fait réagir pendant une heure à 80°C les composés suivants :
- Toluène diisocyanate (TDI) 174 g (1 mole)
- Alcool benzylique 108 g (1 mole)
- Polysiloxane aminé 1229 g (1 mole NH2)
- N-méthyl-pyrrolidone 1290 g
- Xylène 1943 g
- Triéthylamine 2,5 g
Le polysilox NCO bloqué n° 2 obtenu a une masse de 1511 g. La matière sèche est de 32 %.

### EXEMPLE 3

On fait réagir pendant une heure à 80°C les composés suivants :
- Toluène diisocyanate (TDI) 174 g (1 mole)
- Phénol 94 g (1 mole)
- Polysiloxane aminé 1707 g (1 mole NH2)
- N-méthyl-pyrrolidone 1693 g
- Xylène 2540 g
Le polysilox NCO bloqué n° 3 obtenu a une masse de 1975 g. La matière sèche est de 32 %.

La seconde étape de la synthèse du copolymère consiste à greffer le polysilox NCO bloqué sur une chaîne amide-imide. On donne ci-dessous quatre exemples de cette seconde étape (exemples 4 à 7).

### EXEMPLE 4

Les substances suivantes sont introduites dans un réacteur :
- Polysilox NCO bloqué n° 1 611 g (1 eq NCO bloqué)
- Anhydride trimellitique (TMA) 240 g (1,25 moles)
- Acide téréphtalique (PTA) 41,5 g (0,25 mole)
- Toluène diisocyanate (TDI) 174 g (1 mole)
- N-méthyl-pyrrolidone 1100 g
- Triéthylamine 8,5 g
La solution dans la N-méthyl-pyrrolidone ainsi formée est chauffée à 180°C en 4 heures, et maintenue à cette température pendant 5 heures. Le produit obtenu est ensuite refroidi à la température ambiante et filtré. La teneur en matière sèche est de 27 %.

### EXEMPLE 5

Les substances suivantes sont introduites dans un réacteur :
- Polysilox NCO bloqué n° 1 611 g (1 eq NCO bloqué)
- Anhydride trimellitique (TMA) 240 g (1,25 moles)
- Acide téréphlatique (PTA) 41,5 g (0,25 mole)
- N-méthyl-pyrrolidone 1100 g
- Triéthylamine 8,5 g
La solution dans la N-méthyl-pyrrolidone ainsi formée, est chauffée à 180°C en 1 heure, et maintenue à cette température pendant 1 heure. Le produit est ensuite refroidi à la température ambiante. On ajoute alors 174 g (1 mole) de toluène diisocynate TDI. On chauffe à 180°C en 3 heures : la température est maintenue pendant 2 heures, puis 2 heures à 190°C. Le produit obtenu est refroidi à la température ambiante et filtré.
Cet exemple permet d'éviter une trop grande réactivité lors de la montée en température.

### EXEMPLE 6

Les substances suivantes sont introduites dans un ballon :
- Polysilox NCO bloqué n° 3 1975 g (1 eq NCO bloqué)
- Anhydride trimellitique (TMA) 192 g (1 mole)
- Acide téréphtalique (PTA) 83 g (0,5 mole)
- Toluène diisocynate (TDI) 174 g (1 mole)
- N-méthyl-pyrrolidone 500 g
- Xylène 800 g
- Triéthylamine 8,3 g
On chauffe à 170°C en 3 heures. La température est maintenue pendant 6 heures. le produit obtenu est refroidi et filtré à 100°C. La teneur en matière sèche est de 28,5 %.

### EXEMPLE 7

Les substances suivantes sont introduites dans un réacteur :
- Polysilox NCO bloqué n° 2 1511 g (1 eq NCO bloqué)
- Anhydride trimellitique (TMA) 268,8 g (1,4 moles)
- Acide téréphtalique (PTA) 16,6 g (0,1 mole)
- Toluène diisocyanate (TDI) 174 g (1 mole)
- N-méthyl-pyrrolidone 626 g
- Xylène 940 g
- Triéthylamine 8,5 g
Ces substances sont portées à 170°C en 3 heures et maintenues à cette température pendant 6 heures. Le produit est refroidi et filtré à l'ambiante.

Les exemples 4 à 7 aboutissent à un polysilox-polyamide imide. Mais le polysilox NCO bloqué des exemples 1 à 3 offre la possibilité d'aboutir à d'autres copolymères selon l'invention comme l'indiquent les tableaux I à IV qui suivent.

Le tableau I mentionne une variante ou l'on associe le polysilox NCO bloqué à un polyester, un polyesterimide et un polyamide.

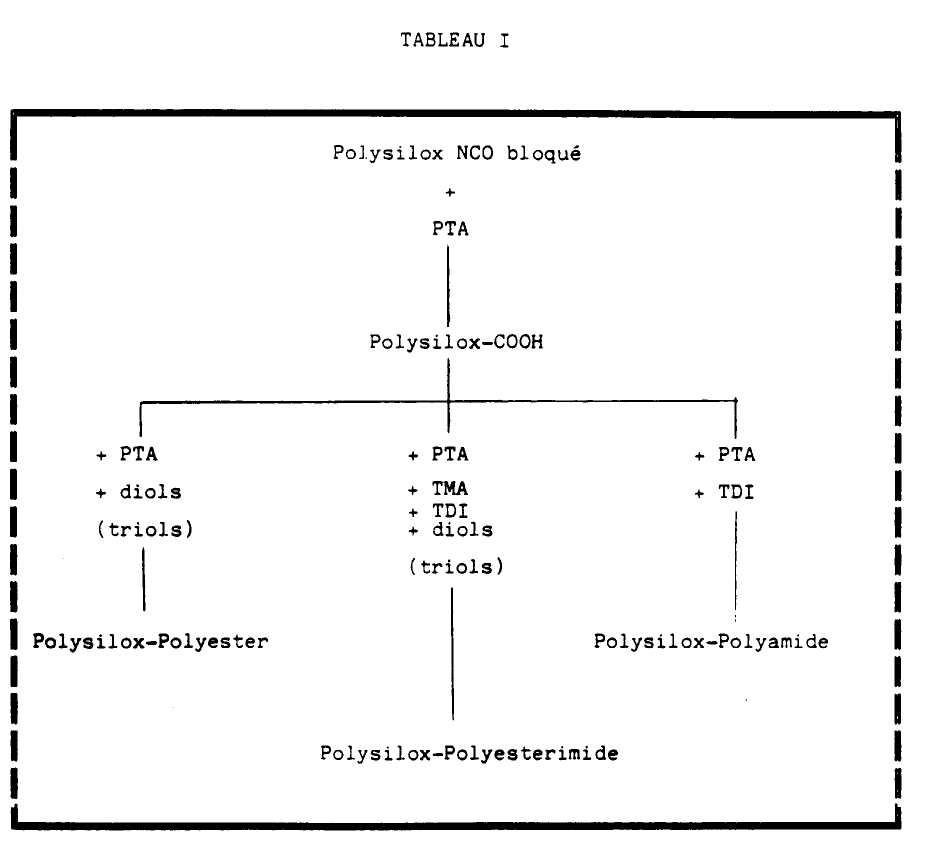

Le tableau II mentionne d'autres variantes permettant d'aboutir à un polysilox-polyamide-imide et un polysilox-polyestermide.

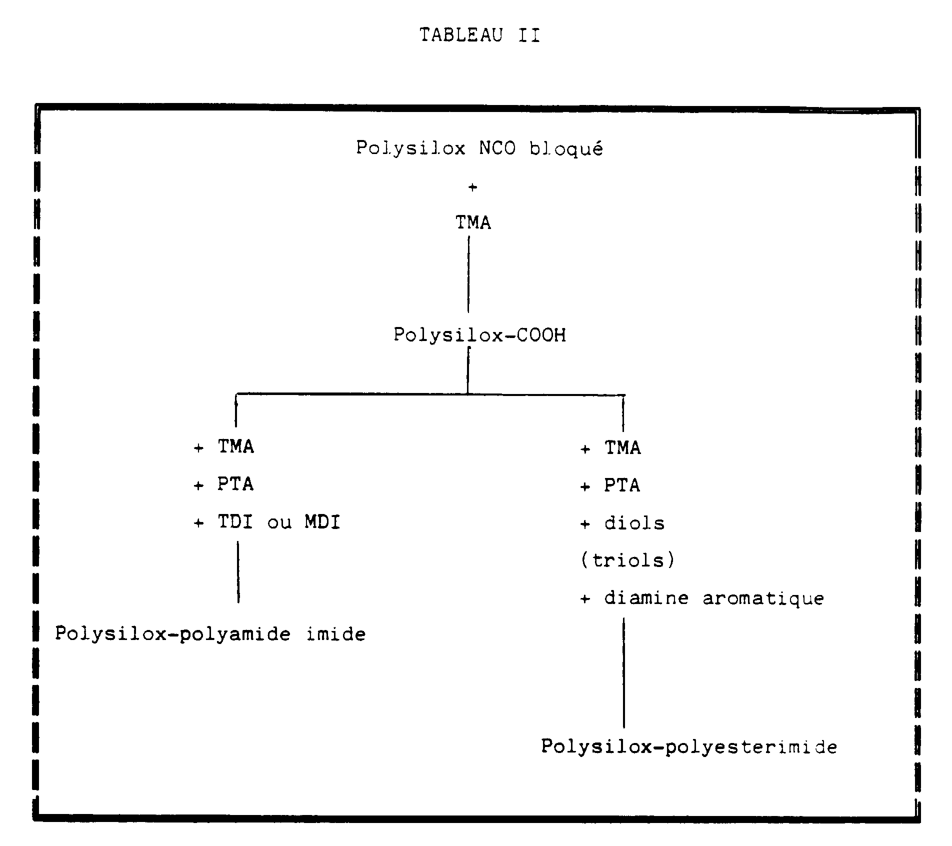

Le tableau III mentionne d'autres variantes permettant d'aboutir à un polysilox-polyimide. "A" signifie dianhydride.

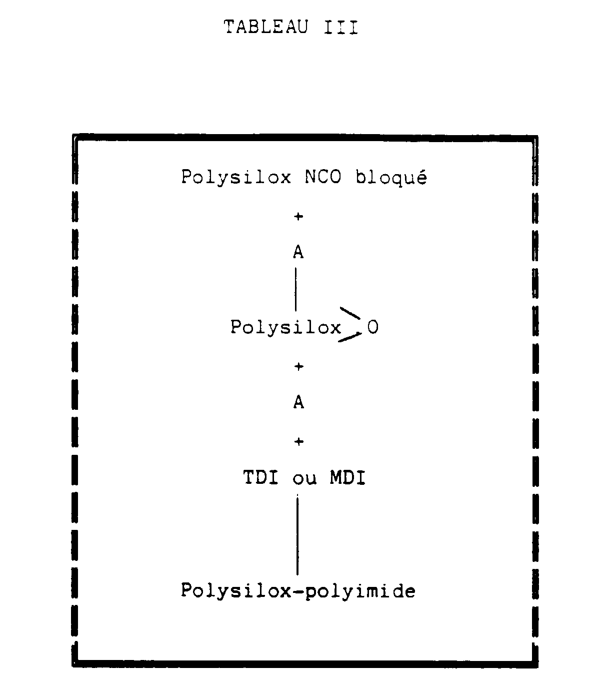

Le tableau IV mentionne une autre variante permettant d'aboutir à un Polysilox-polyuréthane.

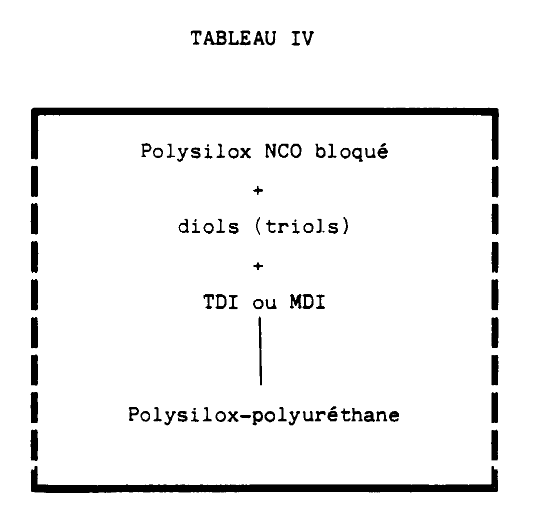

Dans les exemples d'application qui vont suivre, on réalise des fils conducteurs émaillés selon le procédé ci-après. Des vernis sont appliqués en couches minces successives sur le fil à revêtir. A chaque application, la quantité de vernis est calibrée par essuyage, par exemple dans un feutre pour les fils de diamètre inférieur ou égal à 0,07 mm, ou dans une filière pour les fils de diamètre supérieur à 0,07 mm. Le fil enduit de vernis passe ensuite en continu dans un four dont la température est maintenue entre 500° et 750°C. Au cours du traitement thermique, les solvants sont évaporés et le matériau réticule. L'opération est répétée en continu, autant de fois qu'il est nécessaire pour obtenir une couche d'émail d'épaisseur voulue.

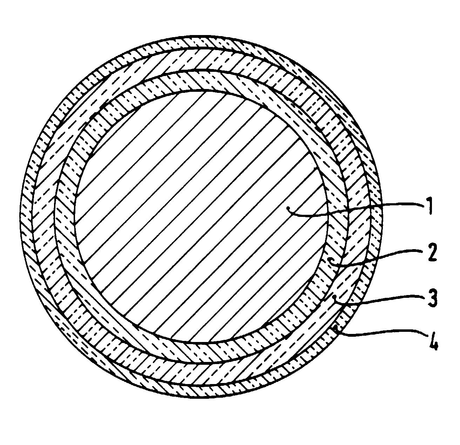

On voit dans la figure 1 un conducteur comprenant un fil métallique 1 muni d'un émail de base 2, d'une surcouche 3 en un autre émail et d'une couche émaillée de glissement 4 selon l'invention. Cette couche est obtenue par enduction de vernis selon l'invention, suivie d'une réticulation.

L'émail de base 2 est un polyestérimide de classe H. La surcouche 3 est un polyamide. La couche de glissement 4 selon l'invention est un alliage comprenant un premier polymère, un second polymère et un copolymère compatibilisant les deux précédents. Le premier polymère est un polyamide-imide noté (AI). Le second polymère est une huile polysiloxane, choisie parmi les huiles de la série 47 V de Rhone-Poulenc, les huiles de la série M de Bayer, ou les huiles de la série AK de Wacker.

Le tableau V donne les propriétés des huiles concernées.

**TABLEAU V**

| Référence huile | Série 47 V | Série M | Série AK |
|---|---|---|---|
| Aspect | limpide incolore | limpide incolore | limpide incolore |
| Extrait sec % | 100 | 100 | 100 |
| Viscosité à 25 °C en mm2/S | 5 à 1000 | 5 à 1000 | 5 à 1000 |

Le copolymère (AC) agent compatibilisant entre le polyamide-imide et l'huile polysiloxane est synthétisé selon l'un des procédés décrits plus haut (exemples 1 à 7).

On a étudié les caractéristiques de trois échantillons de fil émaillé selon l'invention (échantillons 3 à 5 du tableau VI).

A titre de comparaison, on a indiqué les caractéristiques de deux échantillons n^{o} 1 et n^{o} 2 appartenant à l'art antérieur ; dans l'échantillon n^{o} 1 le fil comporte seulement une surcouche extérieure 3 en polyamide-imide avec ou sans paraffine ; dans l'échantillon n^{o} 2, le fil comporte un revêtement extérieur supplémentaire de nylon avec ou sans paraffine.

L'aptitude au glissement des différents conducteurs électriques émaillés a pu être évaluée selon une méthode connue sous le nom de méthode de la torsade, publiée par exemple, dans la Revue "Cuivre Laiton et Alliage" n^{o} 126 de 1973, pages 13-18.

Dans cette méthode, une torsade est formée avec deux brins du conducteur à étudier. A un bout de cette torsade, l'extrémité de l'un des brins est attachée à un point fixe, et au bout opposé de cette torsade, l'extrémité de l'autre brin est reliée à un dynamomètre. L'aptitude au glissement du conducteur est mesurée par l'effort nécessaire pour obtenir un déplacement uniforme de l'un des brins par rapport à l'autre. Une régularité de l'aptitude au glissement du conducteur est évaluée par une comparaison des résultats de plusieurs mesures identiques effectuées sur des torsades formées avec d'autres tronçons de ce même conducteur.

Dans ces mesures de glissement, la torsade est réalisée selon la norme française NF C 26310.

Dans le tableau VI on indique en newtons l'effort de glissement et les écarts types relevés dans une comparaison des résultats d'une dizaine de mesures.

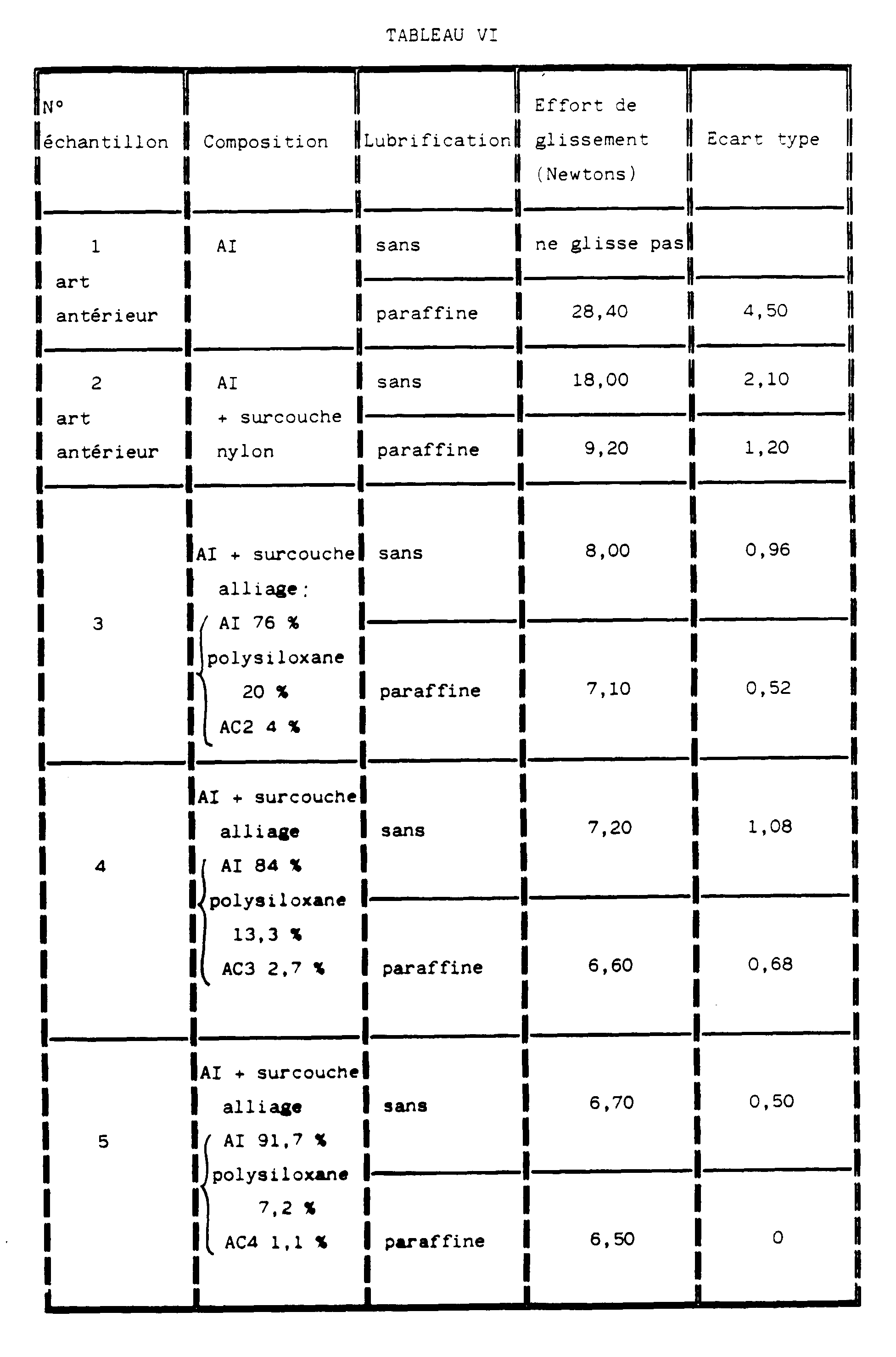

L'échantillon n^{o} 1 a un mauvais coefficient de glissement et un lubrifiant externe permet d'abaisser l'effort appliqué à 28,40 newtons avec une dispersion beaucoup trop élevée (écart type de 4,50 newtons).

L'échantillon n^{o} 2 comporte une surcouche de nylon qui permet d'abaisser l'effort appliqué à son extrémité jusqu'à 18 newtons, mais ne permet pas de résoudre le problème de dispersion dans l'aptitude au glissement ; cette dispersion se situe à un niveau encore nettement trop élevé de 2,10 newtons. En outre, la surcouche de nylon appliquée sur l'émail de base abaisse systématiquement la classe initiale de température de cet émail de base.
La mise en oeuvre d'un lubrifiant externe sur cet échantillon n^{o} 2 permet de faire descendre l'effort à 9,20 newtons. Mais la dispersion dans l'aptitude au glissement reste à un niveau élevé de 1,20 newtons.

Si l'on observe l'aptitude au glissement des échantillons n^{o} 3, 4, 5 selon l'invention, sans lubrification externe par la paraffine, on voit qu'elle est améliorée d'un facteur 3 à 4 par rapport à celle de l'échantillon n^{o} 1 de l'art antérieur muni de paraffine. La dispersion est réduite d'un facteur 4 à 5.
On constate de plus un résultat surprenant particulièrement intéressant lorsque l'on prévoit sur un conducteur selon l'invention une lubrification externe complémentaire. Pour l'échantillon n^{o} 5 la dispersion est nulle, mais de manière générale l'aptitude au glissement des conducteurs émaillés selon la présente invention est régulière.

Il faut noter également que les conducteurs émaillés selon l'invention conservent toutes les propriétés des polyamides-imides, propriétés mécaniques, chimiques, électriques, thermiques. Ainsi l'adhérence, la souplesse, la résistance aux chocs thermiques et la thermoplasticité ne sont pas altérées par le fait que le polyamide -imide ait été allié à un polysiloxane. La classe thermique du conducteur n'est donc pas modifiée.

Bien entendu l'invention n'est pas limitée aux modes de réalisation décrits. On pourra, sans sortir du cadre de l'invention, remplacer tout moyen par un moyen équivalent.

## Revendications

1. Vemis d'émaillage comprenant un premier polymère de base choisi parmi un polyuréthane, un polyamide, un polyamide-imide, un polyester, un polyester-imide, un polyimide, les acétals de l'alcool polyvinylique, les polyépoxy, les polyphénoxy, vernis caractérisé par le fait qu'il comporte en outre
- un second polymère choisi parmi les polysiloxanes, et se trouvant dans une proportion supérieure ou égale à 7,2 % en poids allant jusqu'à 30 % en poids,
- un copolymère, compatible avec ledit premier polymère, et portant des chaînes polysiloxanes greffées, et se trouvant dans une proportion comprise entre 0,5 % et 20 % en poids, ledit copolymère assurant une fonction d'agent compatibilisant entre ledit premier polymère de base et ledit second polymère et créant ainsi un alliage de polymères.

2. Vemis d'émaillage selon la revendication 1, caractérisé par le fait que la quantité dudit copolymère dans le mélange est comprise entre 1 % et 10 % en poids.

3. Procédé de réalisation d'un vernis d'émaillage selon la revendication 1, caractérisé par le fait que, pour réaliser un copolymère portant des fonctions polysiloxanes greffées sur un premier polymère choisi parmi un polyamide-imide, un polyester, un polyesterimide, un polyester amide-imide, un polyamide, un polyimide, un polyuréthane, on fait réagir tout d'abord un polysiloxane fonctionnalisé avec un diisocyanate dont une fonction isocyanate est préalablement bloquée et on greffe ensuite le polysilox NCO bloqué obtenu sur ledit premier polymère.

4. Procédé de réalisation d'un vemis d'émaillage selon la revendication 3, caractérisé par le fait que ledit polysiloxane fonctionnalisé est un polysiloxane aminé.

5. Procédé de réalisation d'un vernis d'émaillage selon l'une des revendications 3 et 4, caractérisé par le fait que le blocage de ladite fonction isocyanate est obtenu par réaction sur un réactif alcoolique, aliphatique, ou aromatique choisi parmi les alcools aliphatiques, les phénols, le résorcinol, l'alcool benzylique, le phloroglucinol.

6. Fil conducteur émaillé, caractérisé par le fait qu'il comporte au moins superficiellement un émail obtenu par réticulation du vernis selon l'une des revendications 1 et 2.

7. Fil conducteur émaillé selon la revendication 6, caractérisé par le fait que ledit émail constitue une surcouche ou une couche de finition sur un émail de base.

8. Fil conducteur émaillé selon la revendication 6, caractérisé par le fait que ledit émail constitue au moins une couche externe d'un émail de base.

9. Fil conducteur émaillé selon l'une des revendications 6 à 8, caractérisé par le fait qu'il appartient à une classe thermique supérieure ou égale à la classe 200 avec un caractère glissant au moins égal à celui obtenue avec une couche externe de polyamide 6-6 paraffinée.

10. Fil conducteur émaillé selon la revendication 9, caractérisé par le fait que sa surcouche en émail est à base de polyamide-imide.

11. Fil conducteur émaillé selon l'une des revendications 6 à 10, caractérisé par le fait qu'il est muni en outre superficiellement d'un agent de lubrification externe choisi parmi les paraffines, les huiles, les cires, les composés polysiloxanes, les composés à chaînes fluorées.

## Patentansprüche

1. Isolierlack, der ein erstes Basispolymer aufweist, das ausgewählt wird aus Polyurethan, Polyamid, Polyamidimid, Polyester, Polyesterimid, Polyimid, Polyvinylalkoholacetal, Polyepoxy, Polyphenyloxy,
dadurch gekennzeichnet, daß er weiter aufweist
- ein zweites Polymer, ausgewählt aus den Polysiloxanen, das in einem Anteil von mindestens 7,2 Gew.% und höchstens 30 Gew.% vorliegt,
- ein Copolymer, das mit dem ersten Polymer kompatibel ist und aufgepfropfte Polysiloxanketten aufweist und in einem Anteil von zwischen 0,5 und 20 Gew.% vorliegt, wobei dieses Copolymer eine Wirkstofffunktion gewährleistet, die das erste Basispolymer mit dem zweiten Polymer kompatibel macht und so eine Polymerlegierung erzeugt.

2. Isolierlack nach Anspruch 1, dadurch gekennzeichnet, daß der Gewichtsanteil des Copolymers im Lack zwischen 1 und 10% beträgt.

3. Verfahren zur Herstellung eines Isolierlacks nach Anspruch 1, dadurch gekennzeichnet, daß man zur Herstellung eines Copolymers mit Polysiloxanfunktionen, die auf ein erstes Polymer aufgepfropft sind, das aus Polyamidimid, Polyester, Polyesterimid, Polyesteramidimid, Polyamid, Polyimid, Polyurethan ausgewählt wird, zunächst ein funktionalisiertes Polysiloxan mit einem Diisocyanat reagieren läßt, von dem eine Isocyanatfunktion vorher blockiert wird, und daß man anschließend das erhaltene blockierte Polysilox NCO auf das erste Polymer aufpfropft.

4. Herstellungsverfahren für einen Isolierlack nach Anspruch 3, dadurch gekennzeichnet, daß das funktionalisierte Polysiloxan ein aminiertes Polysiloxan ist.

5. Herstellungsverfahren für einen Isolierlack nach einem der Ansprüche 3 und 4, dadurch gekennzeichnet, daß die Blockierung der Isocyanatfunktion durch Reaktion mit einem aliphatischen oder aromatischen alkoholischen Reaktionsmittel erhalten wird, das aus dem aliphatischen Alkohol, Phenol, Resorcinol, Benzylalkohol, Phlorglucinol ausgewählt wird.

6. Isolierter Leiterdraht, dadurch gekennzeichnet, daß er zumindest an der Oberfläche eine Schicht aufweist, die durch Vernetzung des oben definierten Lacks erhalten wurde.

7. Leiterdraht nach Anspruch 6, dadurch gekennzeichnet, daß die Schicht eine Oberschicht oder eine Endschicht auf einer Basislackschicht bildet.

8. Leiterdraht nach Anspruch 6, dadurch gekennzeichnet, daß die Schicht mindestens eine äußere Schicht einer Basislackschicht bildet.

9. Leiterdraht nach einem der Ansprüche 6 bis 8, dadurch gekennzeichnet, daß er zu einer Wärmeklasse mindestens gleich der Klasse 200 gehört, mit einer Gleiteigenschaft mindestens gleich der, die mit einer äußeren Schicht aus paraffiniertem Polyamid 6-6 erhalten wird.

10. Leiterdraht nach Anspruch 9, dadurch gekennzeichnet, daß seine Lack-Oberschicht auf der Basis von Polyamidimid ist.

11. Leiterdraht nach einem der Ansprüche 6 bis 10, dadurch gekennzeichnet, daß er außerdem an der Oberfläche ein äußeres Schmiermittel aufweist, das aus Paraffin, Öl, Wachs, den Polysiloxanverbindungen und den Verbindungen mit fluorierten Ketten ausgewählt wird.

## Claims

1. Enamelling lacquer comprising a base first polymer selected from polyurethane, polyamide, polyamide imide, polyester, polyester imide, polyimide, acetal of polyvinyl alcohol, polyepoxy compounds and polyphenoxy compounds,
characterised in that it further comprises:
- a second polymer selected from the polysiloxanes and present in a quantity between 7.2% and 30% by weight,
- a copolymer compatible with said first polymer and contains grafted polysiloxane chains and present in a quantity between 0.5% and 20% by weight, said copolymer constituting a compatibilising agent between said base first polymer and said second polymer and thus creating a polymer alloy.

2. Enamelling lacquer according to claim 1 characterised in that said quantity of said copolymer in the mixture is between 1% and 10% by weight.

3. Process for the production of an enamelling lacquer according to claim 1 characterised in that, to produce a copolymer containing polysiloxane functions grafted onto a first polymer selected from polyamide imide, polyester, polyester imide, polyester amide-imide, polyamide, polyimide and polyurethane, a functionalised polysiloxane is first reacted with a diisocyanate wherein one isocyanate function has been blocked and the blocked NCO polysiloxane thus produced is then grafted onto said first polymer.

4. Process according to claim 3 characterised in that said functionalised polysiloxane is an aminated polysiloxane.

5. Process according to claim 3 or claim 4 characterised in that blocking of said isocyanate function is effected by reaction with an alcoholic, aliphatic or aromatic reactant selected from aliphatic alcohol, phenol, resorcinol, benzyl alcohol and phloroglucinol.

6. Enamelled conductive wire characterised in that it comprises, at least superficially, an enamel obtained by reticulation of the lacquer claimed in claim 1 or claim 2.

7. Enamelled conductive wire according to claim 6 characterised in that said enamel constitutes an overlayer or a finish layer on a base enamel.

8. Enamelled conductive wire according to claim 6 characterised in that said enamel constitutes at least one external layer of a base enamel.

9. Enamelled conductive wire according to any one of claims 6 to 8 characterised in that it belongs to a thermal class above or equal to class 200 with a slipperiness at least equal to that obtained using an external layer of paraffined polyamide 6-6.

10. Enamelled conductive wire according to claim 9 characterised in that the enamel overlayer is polyamide-imide based.

11. Enamelled conductive wire according to any one of claims 6 to 10 characterised in that it further comprises a superficial external lubricating agent selected from paraffin wax, oil, wax, polysiloxane compounds and fluorated chain compounds.
